# EUROPÄISCHE PATENTSCHRIFT

(11) **EP 3 196 429 B1**
(45) Veröffentlichungstag und Bekanntmachung des Hinweises auf die Patenterteilung: **24.07.2019**
(21) Anmeldenummer: 16203332.8
(22) Anmeldetag: 12.12.2016
(51) Int. Cl.: F01L 1/053, F01L 1/18, F01M 9/10

(54) **VENTILTRIEB FÜR EINE BRENNKRAFTMASCHINE**
VALVE DRIVE FOR A COMBUSTION ENGINE
COMMANDE DE SOUPAPE POUR MOTEUR À COMBUSTION INTERNE

(30) Priorität: 14.01.2016 DE 102016200325
(43) Veröffentlichungstag der Anmeldung: 26.07.2017
(73) Patentinhaber: Bayerische Motoren Werke Aktiengesellschaft, 80809 München (DE)
(72) Erfinder: Kraft, Roland, 85716 Unterschleißheim (DE)

(56) Entgegenhaltungen:
- WO-A1-2012/152456
- DE-A1-102007 051 739
- DE-A1-102010 019 131
- DE-A1-102014 116 443
- DE-C1- 19 611 641
- US-A- 5 186 129

## Beschreibung

Die Erfindung betrifft einen Ventiltrieb für eine Brennkraftmaschine mit den Merkmalen aus dem Oberbegriff des Patentanspruchs 1.

Zum technischen Umfeld wird auf die Deutsche Patentschrift DE 196 11 641 C1 hingewiesen. Aus dieser Patentschrift ist ein Ventiltrieb für eine Brennkraftmaschine bekannt mit einer Nockenwelle mit Nocken zur Betätigung von Gaswechselventilen, von denen mindestens ein Nocken mit mehreren axial hintereinander angeordneten Nockenbahnen versehen und drehfest aber axial verschieblich auf der Nockenwelle geführt Ist, und mit einem in Richtung der Nockenwellenachse wirkenden Hubprofil, das mit mindestens einem Betätigungselement zum axialen Verschieben des Nockens zusammenwirkt, wobei das Hubprofil am Nocken ausgebildet ist und das Betätigungselement einen radial zur Nockenwelle angeordneten Betätigungsstift aufweist, der radial verschieblich in oder aus einem Eingriff mit dem Hubprofil zu bringen ist.

Dieser erfindungsgemäße Ventiltrieb einer Brennkraftmaschine ermöglicht die Betätigung eines Gaswechselventils mit zumindest zwei unterschiedlichen Hubkurven. Dazu ist auf der Nockenwelle ein Nocken mit mehreren Nockenbahnen drehfest aber axial verschieblich gelagert. Dieser Nocken weist eine Hubkontur auf, in die das Betätigungselement eingreift und somit eine axiale Verschiebung des Nockens erzeugt, wobei ein Umschalten von einer zu einer anderen Nockenbahn in axialer Richtung erfolgt.

Ein solcher gattungsgemäßer Ventiltrieb für eine Brennkraftmaschine für den Serieneinsatz ist beispielsweise aus der Veröffentlichung der Firma Schaeffler Technologies AG & Co. KG bekannt, mit dem Titel Zylinderabschaltung, "Eine Technik mit Zukunft oder ein Fall für die Nische?" der Autoren Arndt Ihlemann und Norbert Nitz, veröffentlicht im 10. Schaeffler Kolloquium, 03./04. April 2014, S. 172 bis S. 187, insbesondere auf der S. 184, bekannt. In diesem Artikel wird eine Zyllnderabechaltung für eine Brennkraftmaschine mittels des bekannten Schiebenockensystems beschrieben.

Aus der Deutschen Offenlegungsschrift DE 10 2007 061 739 A1, von der die vorllegende Erfindung ausgeht; ist ein gattungsgemäßer Ventiltrieb mit den Merkmalen aus dem Oberbegriff des Patentanspruchs 1 bekannt.

Zum weiteren technischen Umfeld wird auch noch auf das US Patent US 5,186,129, die internationale Patentanmeldung mit der internationalen Veröffentlichungsnummer WO 2012/152456 A1 und die Deutsche Offenlegungsschrift DE 10 2010 019 131 A1 hingewiesen.

Nachteilig an allen bekannten Systemen ist, dass ein Rollenschlepphebel zur Betätigung der Gaswechselventile verwendet wird. Dieser Rollenschlepphebel ist jedoch relativ teuer und bei höchsten Drehzahlen kann die Wätzlagerung problematisch sein.

Aufgabe der vorliegenden Erfindung ist es, eine Maßnahme aufzuzeigen, wie die Herstellungskosten für einen gattungsgemäßen Ventiltrieb deutlich reduziert werden können und gleichzeltig eine Hochdrehzahlfestigkeit erzielt wird.

Diese Aufgabe wird durch das Merkmal im kennzeichnenden Teil des Patentanspruchs 1 gelöst.

In vorteilhafter Weise werden durch den Gleitschlepphebel die Herstellkosten drastisch reduziert, da eine komplette Wälzlagerung entfallen kann. Darüber hinaus weist ein Gleitschlepphebel in vorteilhafter Weise geringere Toleranzen auf, da ein Lagerspiel entfällt, was im Hochdrehzahlbereich der Brennkraftmaschine (größer 6000 1/min) eine lange Lebensdauer bewirkt. Bei einem Übereinanderliegen von der Schmiermittelöffnung und dem ersten Durchbruch wird aus der Nockenwellenlagerstelle durch den Nockenkörper Schmiermittel in die Nockenwelle eingespeist. Aus der ortsfesten Nockenwelle spritzt der Schmiermittelstrahl durch den dritten und den vierten Durchbruch zeit- und phasengenau auf die Gleitfläche des Gleitschlepphebels. Diese getaktete Schmiermittelzufuhr auf die Gleitfläche des Gleitschlepphebels führt zu einem deutlich reduzierten Bedarf an Schmiermittel im Zylinderkopf gegenüber einer permanenten Schmierung. Darüber hinaus führt diese Art der Schmierung durch die Nockenwelle hindurch in vorteilhafter Weise zu einer gezielten Schmierung der belasteten Gleitflächen sowie der Verzahnung zwischen Nockenwelle und Nockenkörper bei der axialen Verschiebung.

Vorteilhafte Weiterbildungen der Erfindung sind in den Unteransprüchen beschrieben.

Die Ausgestaltung gemäß der Patentansprüche 2 bis 4 sind besonders bevorzugte Ausführungsvarianten, die im Rahmen der geometrischen Auslegung des Ventiltriebs verwendet werden.

Die Ausgestaltung gemäß der Patentansprüche 5 bis 7 ist eine weitere besonders bevorzugte Ausführungsform, bei der das Schmiermittelvolumen im Inneren der Nockenwelle deutlich reduziert wird und der Druckaufbau des Schmiermittels in der Nockenwelle wesentlich schneller erfolgt. Dies führt nochmals zu einem deutlich geringeren Schmiermittelbedarf und zu einer schnelleren Reaktionszeit der Schmiermittelzufuhr und Schmiermittelabfuhr.

Im Folgenden ist die Erfindung anhand eines bevorzugten Ausführungsbeispiels in drei Figuren näher erläutert.
- Figur 1: zeigt einen Schnitt durch eine Nockenwelle eines erfindungsgemäßen Ventiltriebs für eine Brennkraftmaschine.
- Figur 2: zeigt eine Aufsicht auf die Nockenwelle des erfindungsgemäßen Ventiltriebs.
- Figur 3: zeigt eine dreidimensionale Darstellung eines Abschnitts der Nockenwelle des erfindungsgemäßen Ventiltriebs.

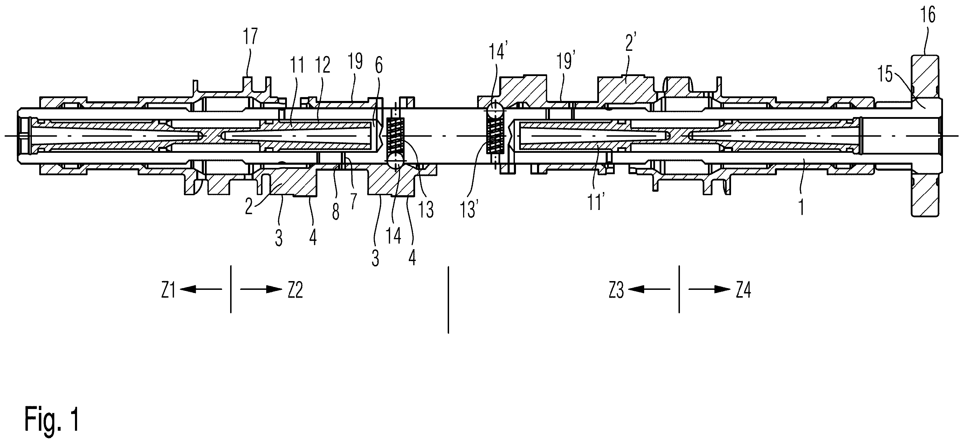

Im Folgenden gelten In Figuren 1 bis 3 für gleiche Bauelemente die gleichen Bezugsziffern.

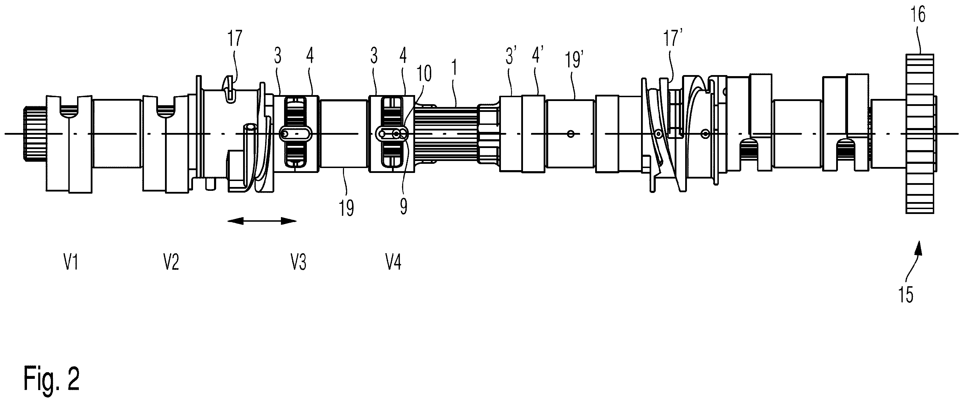

Figur 1 zeigt einen Schnitt durch eine Nockenwelle 1 für einen erfindungsgemäßen Ventiltrieb für eine nicht dargestellte Brennkraftmaschine für ein Kraftfahrzeug. Im vorliegenden Ausführungsbeispiel ist die Nockenwelle 1 für vier Zylinder der Brennkraftmaschine In Reihe vorgesehen. Die Anordnung der Zylinder ist mit Z1, Z2, Z3 und Z4 verdeutlicht. Für jeweils zwei Zylinder Z1 und Z2, bzw. Z3 und Z4 der Brennkraftmaschine ist jeweils ein Nockenkörper 2, 2' zur Betätigung von jeweils zwei Gaswechselventilen je Zylinder V1 und V2, bzw. V3 und V4, dargestellt In Fig. 2, vorgesehen. Das heißt, der Nockenkörper 2 ist für die Zylinder Z1 und Z2 und die vier Ventile V1, V2, V3 und V4 vorgesehen und der Nockenkörper 2' ist für die Zylinder Z3 und Z4 mit den zugehörigen nicht beschrifteten weltern vier Ventilen vorgesehen.

Damit die weitere Ausführung übersichtlicher bleibt, wird im Weiteren nur noch der Nockenkörper 2 näher erläutert, wobei die Ausführung analog für den Nockenkörper 2' gilt.

Der Nockenkörper 2 weist für jedes zugehörige Gaswechselventil V1, V2, V3 und V4 eine erste und eine zweite, axial nebeneinanderliegende Nockenbahn 3, 4, mit unterschiedlichen Gaswechselventilhubbahnen auf. Die Nockenkörper 2 sind hierbei drehfest und axial verschieblich radial um die Nockenwelle 1 angeordnet. Für die axiale Verschiebung weist die Nockenwelle 1 am Umfang mehrere sich axial erstreckende Zähne auf. Weiter weist die Nockenwelle 1 einen sich in axialer Richtung erstreckenden Hohlraum 6 auf. Eine Antriebsseite der Nockenwelle 1 ist bis 15 beziffert, ein Antriebsrad für die Nockenwelle mit 16.

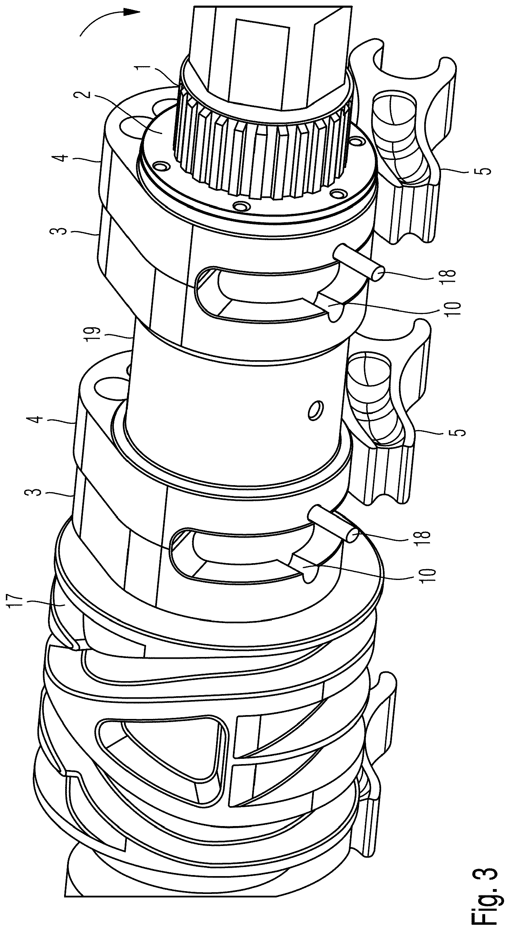

Eine Hubverstellung der Gaswechselventile erfolgt mittelbar über einen in Figur 3 dargestellten Gleitschlepphebel 5.

Durch diese erfindungsgemäße Ausgestaltung werden die Herstellkosten für einen gattungsgemäßen Ventiltrieb wesentlich reduziert und gleichzeitig wird ein Hochdrehzahlkonzept für die Brennkraftmaschine ermöglicht, d. h. Dauerdrehzahlen von über 6000 1/min sind problemlos darstellbar.

Da die grundlegenden mechanischen Eigenschaften der Nockenwelle 1 bereits in der Patentschrift DE 196 11 641 C1 ausführlich beschrieben sind, wird im Rahmen dieser Patentanmeldung nicht weiter auf die exakte mechanische Funktion, insbesondere der Verschiebefunktion eingegangen.

Weiter ist die Nockenwelle 1 in diesem Ausführungsbeispiel mit vier Nockenwellenlagern 19, die in die Nockenkörper 2, 2' eingearbeitet sind, in einem nicht dargestellten Zylinderkopf der Brennkraftmaschine drehbar gelagert. Weiter ist der Hohlraum 6 über eine Schmiermittelöffnung in dem Nockenwellenlager im Zylinderkopf und einem ersten Durchbruch 7 in der Nockenwelle 1 und einem zweiten Durchbruch 8 in dem Nockenkörper 2 mit einem Schmiermittel der Brennkraftmaschine befüllber, wobei In Drehrichtung der Nockenwelle 1 vor einer Nockenerhebung einer Nockenbahn 3. 4 ein dritter Durchbruch 9 in der Nockenwelle 1 und ein vierter Durchbruch 10 Im Nockenkörper 2 angeordnet ist. zum Austritt des

Schmiermittels aus dem Hohlraum 6. zur intermittierenden Schmierung der Gleitschlepphebels 5.

In einer bevorzugten Ausführungsform erstreckt sich die Schmiermittelöffnung über 50° bis 100°. Insbesondere 80° bis 100° radial umlaufend im Nockenwellenlager im Zylinderkopf. Weiter erstreckt sich bevorzugt die Schmiermittelöffnung zwiechen 5mm und 20mm in axialer Richtung, dies ist abhärgig vom Verschiebeweg des Nockenkörpers 2. Wiederum In einer weiteren bevorzugten Ausführungsform erstreckt sich der vierte Durchbruch 10 zwischen 5mm und 20mm in axialer Richtung, was obenfalls wieder abhängig vom Verschiebeweg der Nockenkörper 2 auf der Nockenwelle 1 ist.

über die geometrische Ausgestaltung kann somit festgelegt werden, über weichen Winkelbereich der Nockenwelle 1 eine Befüllung den Hohlraumes 6 mit Schmiermittel erfolgt, bzw. über welchen Winkelbereich eine Schmierung der Gleitschlepphebels 5 erfolgt.

In der bevorzugten Ausführungsform die in den Figuren 1 bis 3 dargestellt ist. befindet sich in dem Hohlraum 6 ein Verdrängungskörper 11. Hierbei bildet der Verdrängungskörper 11 In dem Hohlraum 6 in axialer Richtung einen radialen Ringspalt 12. Bevorzugt hat der radiale Ringspalt 12 eine radiale Stärke zwischen 0.1 mm und 3mm.

Durch diese Ausgestaltungsvariante wird das Schmiermittelvolumen im Inneren der Nockenwelle 1 deutlich reduziert und somit ein schnellerer Druckaufbau erzielt, was zu einer exakteren Schmiermitteldosierung für die Gleitschlepphebel 5 führt, da der Aufbau des Schmiermitteldruck durch diese Maßnahme beschleunigt wird.

Figur 2 zeigt eine Aufsicht auf die Nockenwelle 1 des erfindungsgemäßen Ventiltriebs für eine Brennkraftmaschine. Während in Figur 1 insbesondere der zweite Durchbruch 8 und der dritte Durchbruch 9 für die Befüllung der Nockenwelle 1 mit Schmiermittel erkennbar sind, so sind in Figur 2 der dritte Durchbruch 9 sowie der vierte Durchbruch 10 zur Schmierung des Gleitschlepphebels 5 ersichtlich. Weiter ist in Figur 2 erkennbar, dass die Nockenkörper 2 durch die axiale Verzahnung auf der Nockenwelle 1 axial schiebebeweglich und drehfest angeordnet sind. Die axiale Verschiebung des Nockenkörpers 2 ist mit einem Doppelpfeil dargestellt.

Figur 3 zeigt eine Aufsicht auf eine dreidimensional dargestellte Nockenwelle 1 für einen erfindungsgemäßen Ventiltrieb für eine Brennkraftmaschine. Deutlich erkennbar in Figur 3 ist die axiale Verzahnung der Nockenwelle 1. Weiter sind in Figur 3 die nebeneinander angeordneten Nockenbahnen 3, 4, erkennbar, die durch eine axiale Verschiebung des Nockenkörpers 2 abwechselnd mit den Gleitschlepphebeln 5 in Wirkverbindung bringbar sind.

Darüber hinaus ist austretendes Schmiermittel aus dem Nockenkörper 2 mit 18 beziffert. Wie aus Figur 3 weiter hervorgeht, tritt das Schmiermittel 18 aus dem Nockenkörper 2 dann aus, bevor der erhabene Bereich einer Nockenbahn 3, 4 mit dem Gleitschlepphebel 5 in Wirkverbindung ist. Eine Drehrichtung der Nockenwelle 1 ist mit einem Pfeil eingezeichnet.

### Bezugszeichenliste:

- 1.: Nockenwelle
- 2, 2': Nockenkörper
- 3, 3': erste Nockenbahn
- 4, 4': zweite Nockenbahn
- 5.: Gleitschiepphebel
- 6.: Hohlraum
- 7.: erster Durchbruch
- 8.: zweiter Durchbruch
- 9.: dritter Durchbruch
- 10.: vierter Durchbruch
- 11, 11': Verdrängungskörper
- 12.: radialer Ringspalt
- 13, 13': Feder
- 14, 14': Kugel
- 15.: Antriebeseite
- 16.: Antriebsrad
- 17.: Verschiebekulisse
- 18.: Schmiermittelaustritt
- 19, 19': Nockenwellenlager
- Z1: erster Zylinder
- Z2: zweiter Zylinder
- Z3: dritter Zylinder
- Z4: vierter Zylinder

- V1: erstes Ventil
- V2: zweites Ventil
- V3: drittes Ventil
- V4: viertes Ventil

## Patentansprüche

1. Ventiltrieb für eine Brennkraftmaschine mit einer Nockenwelle (1) mit einem Nockenkörper (2) zur Betätigung von zumindest einem Gaswechselventil, wobei der Nockenkörper (2) zumindest eine erste und eine zweite, axial nebeneinander liegende Nockenbahn (3, 4) mit unterschiedlichen Gaswechselventilhubbahnen aufweist und drehfest und axial verschieblich radial um die Nockenwelle (1) angeordnet ist, wobei eine Hubverstellung des Gaswechseiventils mittelbar über einen Gleitschlepphebel (5) erfolgt, und wobei die Nockenwelle (1) in einem Nockenwellenlager drehbar gelagert ist, **dadurch gekennzeichnet, dass** die Nockenwelle in axialer Richtung einen Hohlraum (6) aufweist und der Hohlraum (6) über eine Schmiermittelöffnung in dem Nockenwellenlager und einem ersten Durchbruch (7) in der Nockenwelle (1) und einen zweiten Durchbruch (8) in dem Nockenkörper (2) mit einem Schmiermittel befüllbar ist,
wobei in Drehrichtung der Nockenwelle (1) vor einer Nockenerhebung In der Nockenwelle (1) ein dritter Durchbruch (9) und in dem Nockenkörper (2) ein vierter Durchbruch (10) angeordnet ist, zum Austritt des Schmiermittels aus dem Hohlraum (6), zur Schmierung des Gleitschlepphebels.

2. Ventiltrieb nach Patentanspruch 1,
**dadurch gekennzeichnet, dass** sich die Schmiermittelöffnung über 50° bis 100°, insbesondere 80° bis 100° radial umlaufend in dem Nockenwellenlager erstreckt.

3. Ventiltrieb nach Patentanspruch 1 oder 2,
**dadurch gekennzeichnet, dass** sich die Schmiermittelöffnung zwischen 5 mm und 20 mm in axialer Richtung erstreckt.

4. Ventiltrieb nach einem der Patentansprüche 1 bis 3,
**dadurch gekennzeichnet, dass** sich der vierte Durchbruch (10) zwischen 5 mm und 20 mm in axialer Richtung erstreckt.

5. Ventiltrieb nach einem der Patentansprüche 1 bis 4,
**dadurch gekennzeichnet dass** in dem Hohlraum (6) ein Verdrängungskörper (11) angeordnet ist.

6. Ventiltrieb nach Patentanspruch 5,
**dadurch gekennzeichnet, dass** der Verdrängungskörper (11) in dem Hohlraum (6) in axialer Richtung einen radialen Ringspalt (12) bildet.

7. Ventiltrieb nach Patentanspruch 5 oder 6,
**dadurch gekennzeichnet, dass** der radiale Ringspalt (12) eine radiale Stärke zwischen 0,1 mm und 3 mm aufweist.

## Claims

1. A valve train for an internal combustion engine with a camshaft (1) with a cam member (2) for actuating at least one gas exchange valve, wherein the cam member (2) has at least a first and a second cam track (3, 4), lying axially next to one another, with different gas exchange valve stroke paths, and is arranged non-rotationally and axially displaceably radially around the camshaft (1), wherein a stroke adjustment of the gas exchange valve takes place indirectly by way of a slider-type rocker arm (5),
and wherein the camshaft (1) is rotatably mounted in a camshaft bearing, **characterised in that** the camshaft in the axial direction has a cavity (6) and the cavity (6) can be filled with a lubricant by way of a lubricant opening in the camshaft bearing and a first aperture (7) in the camshaft (1) and a second aperture (8) in the cam member (2),
wherein in the direction of rotation of the camshaft (1) a third aperture (9) is arranged in front of a cam lobe in the camshaft (1) and a fourth aperture (10) is arranged in the cam member (2), for the lubricant to emerge from the cavity (6), for lubricating the slider-type rocker arm.

2. A valve train according to Claim 1,
**characterised in that** the lubricant opening extends over 50° to 100°, especially 80° to 100°, in radially circumambient manner in the camshaft bearing.

3. A valve train according to Claim 1 or Claim 2,
**characterised in that** the lubricant opening extends between 5 mm and 20 mm in the axial direction.

4. A valve train according to one of Claims 1 to 3,
**characterised in that** the fourth aperture (10) extends between 5 mm and 20 mm in the axial direction.

5. A valve train according to one of Claims 1 to 4,
**characterised in that** a displacer (11) is arranged in the cavity (6).

6. A valve train according to Claim 5,
**characterised in that** the displacer (11) in the cavity (6) forms a radial annular gap (12) in the axial direction.

7. A valve train according to Claim 5 or Claim 6,
**characterised in that** the radial annular gap (12) has a radial thickness of between 0.1 mm and 3 mm.

## Revendications

1. Système de commande de soupape destiné à un moteur à combustion interne comprenant un arbre à cames (1) ayant un corps de cames (2) permettant d'actionner au moins une soupape d'échange de gaz, le corps de cames (2) comprenant au moins une première piste de came et une seconde piste de came (3, 4) situées axialement côte-à-côte, avec des courses de soupape d'échange de gaz différentes, et étant monté solidairement en rotation et mobile en translation axiale radialement autour de l'arbre à cames (1), le réglage de la course de la soupape d'échange de gaz étant effectué de manière indirecte par l'intermédiaire d'un culbuteur glissant (5), et l'arbre à cames (1) étant monté mobile en rotation dans un palier d'arbre à cames,
**caractérisé en ce que**
l'arbre à cames comporte, un volume creux (6) en direction axiale et le volume creux (6) peut être rempli d'un fluide de lubrification par l'intermédiaire d'une ouverture de fluide de lubrification située dans le palier de l'arbre à cames et d'un premier perçage (7) situé dans l'arbre à cames (1) et d'un second perçage (8) situé dans le corps de cames (2),
un troisième perçage (9) étant situé à l'avant d'un bossage de cames de l'arbre à cames (1) dans le sens de rotation de cet arbre à cames (1),
un quatrième perçage (10) étant situé dans le corps de cames (2) pour permettre au fluide de lubrification de sortir du volume creux (6) de façon à lubrifier le culbuteur glissant.

2. Procédé conforme à la revendication 1,
**caractérisé en ce que**
l'ouverture du fluide de lubrification s'étend radialement sur 50° à 100°, en particulier sur 80° à 100° sur la circonférence du palier de l'arbre à cames.

3. Système conforme à la revendication 1 ou 2,
**caractérisé en ce que**
l'ouverture du fluide de lubrification s'étend sur 5 mm à 20 mm en direction axiale.

4. Système conforme à l'une des revendications 1 à 3,
**caractérisé en ce que**
le quatrième perçage (10) s'étend sur 5 mm à 20 mm en direction axiale.

5. Système conforme à l'une des revendications 1 à 4,
**caractérisé en ce qu'**
un corps de refoulement (11) est monté dans le volume creux (6).

6. Système conforme à la revendication 5,
**caractérisé en ce que**
le corps de refoulement (11) forme une fente annulaire radiale (12) dans le volume creux (6) en direction axiale.

7. Système conforme à la revendication 5 ou 6,
**caractérisé en ce que**
la fente annulaire radiale (12) a une épaisseur radiale comprise entre 0,1 mm et 3 mm.
